# EUROPEAN PATENT SPECIFICATION

(11) **EP 3 242 374 B1**
(45) Date of publication and mention of the grant of the patent: **23.10.2019**
(21) Application number: 15875574.4
(22) Date of filing: 18.12.2015
(51) Int. Cl.: H02J 7/02, H02J 7/00, H04B 5/00, H02J 5/00, H02J 50/12

(54) **WIRELESS POWER TRANSMISSION DEVICE AND WIRELESS CHARGING SYSTEM COMPRISING SAME**
VORRICHTUNG ZUR DRAHTLOSEN STROMÜBERTRAGUNG UND DRAHTLOSES LADESYSTEM DAMIT
DISPOSITIF DE TRANSMISSION DE PUISSANCE SANS FIL ET SYSTÈME DE CHARGE SANS FIL LE COMPRENANT

(30) Priority: 29.12.2014 KR 20140192398
(43) Date of publication of application: 08.11.2017
(73) Proprietor: LG Innotek Co., Ltd., Seoul 04637 (KR)
(72) Inventor: PARK, Soo Young, Seoul 04637 (KR); LEE, Jong Heon, Seoul 04637 (KR)
(74) Representative: DREISS Patentanwälte PartG mbB
(86) International application number: PCT/KR2015/013938
(87) International publication number: WO 2016/108480

(56) References cited:
- WO-A1-2014/200247
- JP-A- 2013 070 581
- JP-B1- 5 639 693
- KR-A- 20130 069 346
- KR-A- 20130 142 862
- KR-B1- 101 372 472
- US-A1- 2011 018 679
- US-A1- 2012 231 731
- US-A1- 2013 300 206
- US-A1- 2014 028 244

## Description

### [Technical Field]

The present invention relates to a wireless power transmitting apparatus and a wireless charging system which includes the wireless power transmitting apparatus.

### [Background Art]

Wireless charging technology is a technology which is able to wirelessly supply and receive power without a connector for delivering the power. There is wireless charging technology such as an electromagnetic induction method using a coil, a wireless power transferring method converts electric energy into microwaves and delivers the microwaves, and a method using resonance.

The electromagnetic induction method is a method in which power is transferred between a first coil and a second coil using electricity-generating properties as a result of moving a magnet toward the coils to generate an induction current. That is to say, it is a method in which a magnetic field is generated at a transmitting end, and instead of a magnet, the magnetic field generates energy at a receiving end, in which this phenomenon is called a magnetic induction phenomenon. Because the efficiency of energy transfer of the electromagnetic induction method is excellent, the electromagnetic induction method has been used widely and has been adapted to various devices.

A resonance method uses resonating properties of sound, such as when a tuning fork is resonated, a wine glass next to the tuning fork is resonated with the same frequency as that of the tuning fork. Nevertheless, the resonance method resonates an electromagnetic wave containing electric energy, instead of resonating the sound. RF/Micro wave radiation method is a power transferring method in which power energy is converted into microwaves which is advantageous for wireless transfer and delivering energy. In the aforementioned method, a concept of a signal is not that which is used for wireless communication such as a radio or a wireless telephone, but a concept of sending electric energy; i.e. not a signal sent with a carrier wave in normal communication, but the wireless power transfer which only sends a carrier wave. In wireless charging, when an apparatus for wireless power charging is detected at a wireless power transmitting side, the power for the charging is transferred so as to supply the power to the apparatus and it is identified whether the apparatus is for wireless charging. If the apparatus is identified as an apparatus for wireless charging, power transfer is negotiated and then a wireless power receiving apparatus starts to be charged. Next, the wireless power transmitting apparatus supplies the power to the corresponding wireless power receiving apparatus, however, there is a problem in that there is no means for identifying directly whether the charging of the wireless power receiving apparatus is completed so that after completing of charging, the power continues to be supplied to the wireless power receiving apparatus. The efficiency of the power which is supplied after completion of charging is significantly lowered and results in unnecessary waste of power. Features related to the subject-matter of claim 1 are known from JP 2013 070581 A, JP 5 639 693 B1 and US 2013/300206 A1.

### [Disclosure]

### [Technical Problem]

Embodiments of the present invention provide a wireless power transmitting apparatus capable of monitoring a charging state of a wireless power receiving end at a wireless power transmitting end in real time and determining a fully-charged state on its own and a wireless charging system including the wireless power transmitting apparatus.

Furthermore, embodiments of the present invention provide a wireless power transmitting apparatus capable of preventing unnecessary loss of power by controlling an amount of transmitting power when wireless charging has been completed and a wireless charging system including the wireless power transmitting apparatus.

Furthermore, embodiments of the present invention provide a wireless power transmitting apparatus capable of preventing misjudgment of the completion of charging, which may be caused by environmental factors such as high temperature at a wireless power receiving end and a wireless charging system including the wireless power transmitting apparatus.

### [Technical Solution]

According to one embodiment of the present invention, a wireless power transmitting apparatus is disclosed which includes: a detecting unit which detects at least one of current and voltage of a wireless power transmitting coil; and a charge monitoring unit which determines when wireless charging has been completed in the case that at least one of the detected current and voltage is shown to be below a charge threshold value over a set amount of time.

A control unit may further be included which regulates transmitting voltage when the wireless charging has been completed.

The control unit may regulate the transmitted voltage using the detected current value when the wireless charging has been completed.

The control unit may regulate the transmitted voltage based on a reduction rate of the detected current value when the wireless charging has been completed.

An alarm unit may be configured to further be included which outputs an alarm to the outside when the wireless charging has been completed.

The charge monitoring unit receives received power from a wireless power receiving apparatus, and when the received power value is shown to be below a reception threshold value during the set period of time, it may be determined that the wireless charging has been completed.

The charge monitoring unit may determine whether the wireless charging has been completed by comparing the received power value with the reception threshold value when at least one of the detected current and voltage is shown to be below the charging threshold value over a set amount of time.

A control unit may further be included which regulates transmitted voltage when the wireless charging has been completed.

The control unit may regulate the transmitted voltage based on the received power value when the wireless charging has been completed.

The control unit may regulate the transmitting voltage based on a reduction rate of the received power value when the wireless charging has been completed.

The charging threshold value may be set to 90% or less of a charge value in a state in which the charging is in progress.

### [Advantageous Effects]

The wireless power transmitting apparatus and the wireless charging system including the wireless power transmitting apparatus of the present invention are able to monitor a charging state of a wireless power receiving end at a wireless power transmitting end and determine a fully-charged state on their own.

Further, it is possible to prevent unnecessary loss of power by controlling an amount of transmitting power when wireless charging is completed.

Further, it is possible to prevent misjudgment of charge completion which may be caused by environmental factors such as high temperature at a wireless power receiving end.

### [Description of Drawings]

Fig. 1 is a block diagram of components of a wireless charging system according to an embodiment of the present invention,
Fig. 2 is a conceptual diagram of a wireless charging system according to an embodiment of the present invention,
Fig. 3 is a block diagram of components of a wireless power transmitting apparatus according to an embodiment of the present invention,
Fig. 4 is a drawing for explaining operation of a wireless power transmitting apparatus according to an embodiment of the present invention, and
Fig. 5 is a drawing for explaining operation of a wireless power transmitting apparatus according to another embodiment of the present invention.

### [Modes of the Invention]

While the invention is open to various modifications and alternative embodiments, specific embodiments thereof are shown by way of example in the drawings and will be described. However, it should be understood that there is no intention to limit the invention to the particular embodiments disclosed, but on the contrary, the invention is to cover all modifications, equivalents, and alternatives falling within the spirit and scope of the invention.

It will be understood that, although the terms including ordinal numbers such as "first," "second," etc. may be used herein to describe various elements, these elements are not limited by these terms. These terms are only used to distinguish one element from another. For example, a second element could be termed a first element without departing from the teachings of the present inventive concept, and similarly a first element could be also termed a second element. The term "and/or" includes any and all combination of one or more of the associated items listed.

When an element is referred to as being "connected to" or "coupled with" another element, it can not only be directly connected or coupled to the other element, but also it can be understood that intervening elements may be present. In contrast, when an element is referred to as being "directly connected to" or "directly coupled with" another element, there are no intervening elements present.

The terminology used herein is for the purpose of describing particular embodiments only and is not intended to limit the present inventive concept. As used herein, the singular forms "a," "an," and "the," are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, embodiments of the present invention will be described in detail with reference to the accompanying drawings, and regardless of the numbers in the drawings, the same or corresponding elements will be assigned with the same numbers and overlapping descriptions will be omitted.

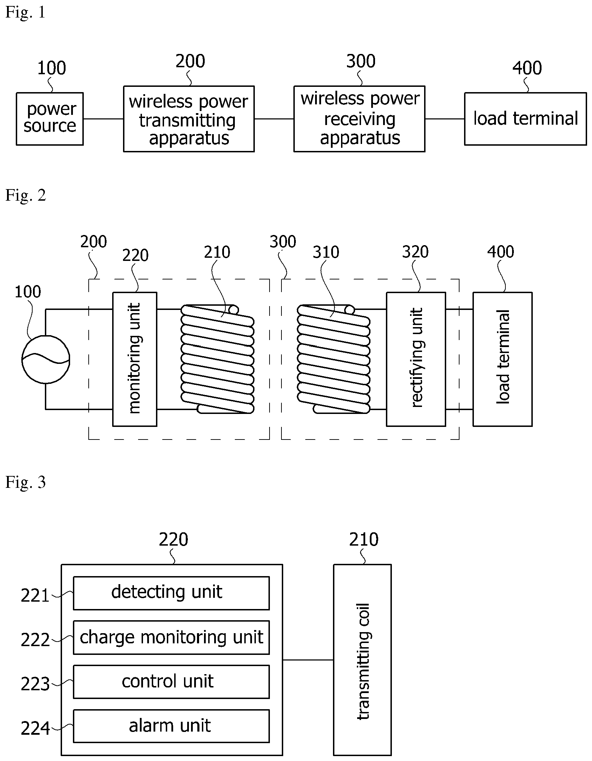

Fig. 1 is a block diagram of components of a wireless charging system according to an embodiment of the present invention, and Fig. 2 is a conceptual diagram of a wireless charging system according to an embodiment of the present invention.

Referring to Fig. 1 and Fig. 2, a wireless charging system 10 includes a power source 100, a wireless power transmitting apparatus 200, a wireless power receiving apparatus 300, and a load terminal 400.

The wireless power transmitting apparatus 200 is connected to the power source 100 and receives power from the power source 100. The wireless power transmitting apparatus 200 wirelessly transmits power to the wireless power receiving apparatus 300. In this case, the wireless power transmitting apparatus 200 may transmit power using an electromagnetic induction method or a resonance method. Although the power source 100 and the wireless power transmitting apparatus 200 are illustrated as separated elements, the structure is not limited thereto. The power source 100 may be included in the wireless power transmitting apparatus 200.

The wireless power receiving apparatus 300 wirelessly receives power from the wireless power transmitting apparatus 200. The wireless power receiving apparatus 300 may also receive power using the electromagnetic induction method or the resonance method. Furthermore, the wireless power receiving apparatus 300 provides the received power to the load terminal 400. The load terminal 400 may be a battery or a device with a built-in battery. The load terminal 400 and the wireless power receiving apparatus 300 are illustrated as separated elements, the structure is not limited thereto. The load terminal 400 may be included in the wireless power receiving apparatus 300.

The wireless power transmitting apparatus 200 may include a transmitting coil 210 and a monitoring unit 220. The wireless power receiving apparatus 300 may include a receiving coil 310 and a rectifying unit 320.

The power source 100 may generate an alternating current (AC) power having a predetermined frequency and supply it to the transmitting coil 210 of the wireless power transmitting apparatus 200.

Further, the alternating current generated by the transmitting coil 210 may be delivered to the receiving coil 310 which is inductively coupled to the transmitting coil 210. On the other hand, the power delivered to the transmitting coil 210 may be delivered to the wireless power receiving apparatus 300 having the same resonance frequency as the wireless power transmitting apparatus 200 through a frequency resonance method. The power may be transferred between two impedance matched LC circuits through resonance.

The power delivered to the receiving coil 310 may be rectified through the rectifying unit 320 and delivered to the load terminal 400 using the electromagnetic induction method or the resonance method.

The monitoring unit 220 may monitor the charging state of the wireless power receiving apparatus.

Fig. 3 is a block diagram of components of the monitoring unit according to an embodiment of the present invention.

Referring to Fig. 3, the monitoring unit 220 according to an embodiment of the present invention may be configured to include a detecting unit 221, a charge monitoring unit 222, a control unit 223, and an alarm unit 224.

The detecting unit 221 may detect at least one of current and voltage of the wireless power transmitting coil 210. The detecting unit 221 may be configured to include, for example, a current transformer, an electric transformer, and a transformer and to detect current which is flowing through the transmitting coil 210 or voltage which is applied to the transmitting coil 210 and deliver it to the charge monitoring unit 222.

The charge monitoring unit 222 may determine that wireless charging is completed when time during which at least one of the detected current and voltage is kept below a charging threshold value exceeds a first predetermined time. When the charging is completed, current flowing through the transmitting coil 210 is decreased as compared to the time that the charging is in progress. When at least one of the current and voltage which is detected at the detecting unit 221 falls below the charging threshold value, the charge monitoring unit 222 may determine whether the wireless charging has been completed by determining duration during which the detected current or voltage falls below the charging threshold value.

The charging threshold value, for example, may be set to 90% or less of a charging current value or charging voltage value, and may be set differently depending on a type of the wireless power receiving apparatus. The charging threshold may be set differently based on the respective current and voltage. The charge monitoring unit 222 may independently compare the detected current value and the detected voltage value with each respective charging threshold value for the current and the voltage and determine the detected current value and the detected voltage value. In addition, the first predetermined time is for determining duration during which at least one of the current and the voltage of the receiving coil 210 is shown to be below the charging threshold value, and may be set differently depending on a type of the wireless power receiving apparatus 300.

However, in contrast, the charge monitoring unit 222 may compare the received power value which is received from the wireless power receiving apparatus 300 with the reception threshold value, and when the time in which the received power value is kept below the threshold value exceeds a second predetermined time, it may be determined that wireless charging is completed. In this case, the second predetermined time may be set differently from the case in which it is determined whether the wireless charging has been completed using the detected current value and voltage value.

In addition, when a time in which at least one of the current and the voltage is kept below the charging threshold value exceeds the first predetermined time, the charge monitoring unit 222 may compare the received power value which is received from the wireless power receiving apparatus 300 with the reception threshold value, and when the time in which the received power value is kept below the threshold value exceeds a second threshold time, it may be determined that wireless charging has been completed. That is to say, when all of the detected voltage value, the detected current value, and the received power value satisfy the corresponding conditions, it may be determined that wireless charging has been completed. This can prevent any errors that may occur, due to the high temperature state, noise, or surrounding environmental factors, when determining whether the wireless charging has been completed based only on the detected current value and the detected voltage value.

The control unit 223 may regulate the transmitting voltage when the wireless charging has been completed. The control unit 223 may, for example, when the wireless charging has been completed, regulate the transmitting voltage by controlling the power source, or regulate the transmitting voltage so as to not apply the transmitting voltage to the transmitting coil by turning off the power source.

The control unit 223 may regulate the transmitting voltage using the detected current value when the wireless charging has been completed, and in this case, the transmitting voltage may be regulated by taking into consideration a reduction rate of the detected current value. That is to say, when the wireless charging has been completed, an amount of the power which can be received at the wireless power receiving apparatus 300 is decreased. The control unit 223 is able to transmit an amount of the power which is adapted to the amount of the power that can be received by the wireless power receiving apparatus 300 by decreasing the amount of the transmitting voltage in proportion to the detected current value.

In addition, the control unit 223 may regulate the transmitting voltage using the received power value which is received from the wireless power receiving apparatus 300 when the wireless charging has been completed, and in this case, the transmitting voltage may be regulated by taking into consideration a reduction rate of the received power value.

The alarm unit 224 may output an alarm to the outside based on the control of the control unit 223 when the wireless charging has been completed.

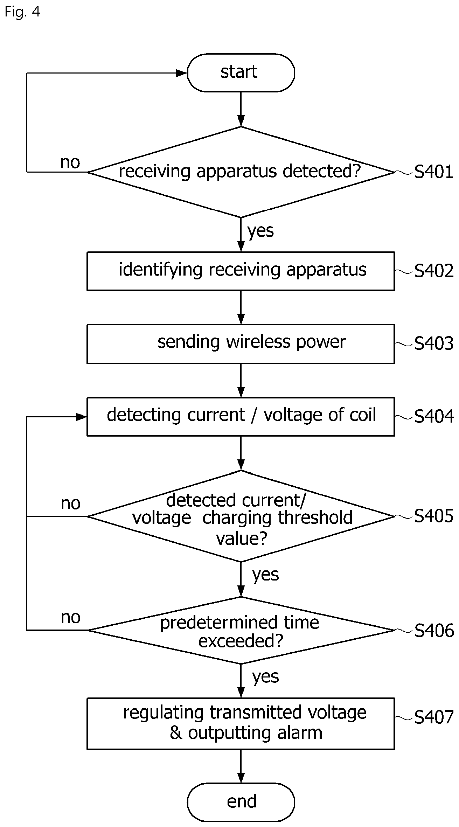

Fig. 4 is a drawing for explaining operation of a wireless power transmitting apparatus according to an embodiment of the present invention.

Firstly, the wireless power transmitting apparatus detects a wireless power receiving apparatus. The wireless power transmitting apparatus may detect the wireless power receiving apparatus, for example, when the wireless power receiving apparatus is placed on the substrate, or when the wireless power receiving apparatus is located within a certain distance (S401).

The wireless power transmitting apparatus identifies the type of detected wireless power receiving apparatus. After identifying the detected wireless power receiving apparatus, the wireless power transmitting apparatus loads a charging threshold value, a predetermined time, and a reception threshold value of the corresponding apparatus. In the case of detecting a new wireless power receiving apparatus, a new charging threshold value, a new predetermined time, and a new reception threshold value can be set (S402).

The wireless power transmitting apparatus sends a wireless power for charging the detected wireless power receiving apparatus (S403).

The detecting unit detects at least one of current and voltage flowing through the receiving coil and delivers the detected current or voltage to the charge monitoring unit (S404).

The charge monitoring unit determines whether at least one of the detected current and voltage is shown to be below the charging threshold value (S405).

When at least one of the detected current and voltage is shown to be below the charging threshold value, the charge monitoring unit determines whether the duration during which at least one of the detected current and voltage is shown to be below the charging threshold value exceeds the first predetermined time, and if the first predetermined time is exceeded, it is determined that the charging of the wireless power receiving apparatus has been completed (S406).

When it is determined that the charging of the wireless power receiving apparatus has been completed, the control unit regulates voltage which is applied to the transmitting coil, and controls the alarm unit so as to be able to output an alarm to the outside (S407).

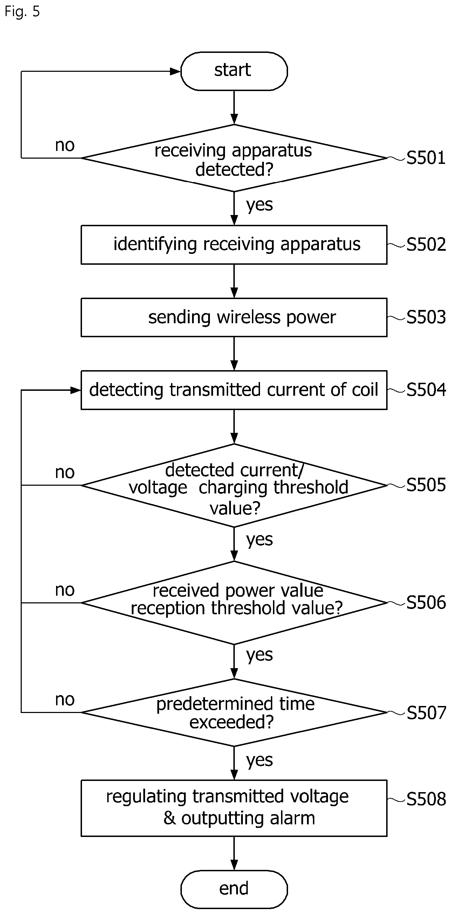

Fig. 5 is a drawing for explaining operation of a wireless power transmitting apparatus according to another embodiment of the present invention.

Firstly, the wireless power transmitting apparatus detects a wireless power receiving apparatus. The wireless power transmitting apparatus may detect the wireless power receiving apparatus, for example, when the wireless power receiving apparatus is placed on the substrate, or when the wireless power receiving apparatus is located within a certain distance (S501).

The wireless power transmitting apparatus identifies the type of the detected wireless power receiving apparatus. After identifying the detected wireless power receiving apparatus, the wireless power transmitting apparatus loads a charging threshold value, a predetermined time, and a reception threshold value of the corresponding apparatus. In the case of detecting a new wireless power receiving apparatus, a new charging threshold value, a new predetermined time, and a new reception threshold value can be set (S502).

The wireless power transmitting apparatus sends wireless power for charging the detected wireless power receiving apparatus (S503).

The detecting unit detects at least one of current and voltage flowing through the receiving coil and delivers the detected current or voltage to the charge monitoring unit (S504).

The charge monitoring unit determines whether at least one of the detected current and voltage is shown to be below the charging threshold value (S505).

When at least one of the detected current and voltage is shown to be below the charging threshold value, the charge monitoring unit determines whether the received power value which is received from the wireless power receiving apparatus is shown to be below the reception threshold value (S506).

The charge monitoring unit determines whether the duration during which at least one of the detected current and voltage is shown to be below the charging threshold value and the duration during which the received power value which is received from the wireless power receiving apparatus exceeds the first predetermined time and the second predetermined time, and if one of the predetermined times has been exceeded respectively, it is determined that the charging of the wireless power receiving apparatus has been completed (S507).

When it is determined that the charging of the wireless power receiving apparatus has been completed, the control unit regulates voltage which is applied to the transmitting coil, and controls the alarm unit so as to be able to output an alarm to outside (S508).

The term "unit" used herein refers to software or hardware such as FPGA (field-programmable gate array) or ASIC, and components which are refers to as "unit" perform certain roles. However, the term "unit" is not limited to software or hardware. A "Unit" may be configured to be placed in a storage medium which is capable of addressing and may be configured to operate one or more processors. Accordingly, by way of an example, a "unit" includes components such as software components, object-oriented software components, class components and task components, and functions, attributes, procedures, subroutines, segments of a program code, drivers, firmware, microcode, circuitry, data, databases, data structures, tables, arrays, and variables. Functions provided within the components and "units" may combine to be a smaller number of components and "units" or be separated as additional components and "units". Moreover, the components and "units" may be made to operate one or more CPUs within a device or a secured multimedia card.

Although exemplary embodiments of the present invention have been referenced and described above, it will be understood that it is possible for those of ordinary skill in the art to implement modifications and variations on the present invention without departing from the scope of the present invention listed in the following appended claims.

## Claims

1. A wireless power transmitting apparatus, comprising:
a detecting unit (221) which is configured to detect at least one of current and voltage of the wireless power transmitting coil (210); and
a charge monitoring unit (222) which is configured to determine that wireless charging has been completed when time during which at least one of the detected current and voltage is kept below a charging threshold value exceeds a first threshold time,
wherein the charge monitoring unit (222) is configured to receive a received power from a wireless power receiving apparatus,
**characterised in that** when a time during which at least one of the detected current and voltage is kept below the charging threshold value exceeds the first threshold time, the charge monitoring unit (222) is configured to compare a received power value received from the wireless power receiving apparatus with a reception threshold value, and
when a time during which the received power value is kept below a reception threshold value exceeds a second threshold time, it is determined that the wireless charging has been completed.

2. The wireless power transmitting apparatus of claim 1,
further comprising a control unit (223) which is configured to regulate the transmitting voltage when the wireless charging has been completed.

3. The wireless power transmitting apparatus of claim 2,
wherein the control unit (223) is configured to regulate the transmitting voltage according to a reduction rate of the detected current value which is detected at the detecting unit (221) when the wireless charging has been completed.

4. The wireless power transmitting apparatus of claim 1,
further comprising an alarm unit (224) which is configured to output an alarm to an outside when the wireless charging has been completed.

5. The wireless power transmitting apparatus of claim 1,
wherein the second threshold time is set differently from the first threshold time.

6. The wireless power transmitting apparatus of claim 2,
wherein the control unit (223) is configured to regulate the transmitting voltage using the received power value when the wireless charging has been completed.

7. The wireless power transmitting apparatus of claim 6,
wherein the control unit (223) is configured to regulate the transmitting voltage using a reduction rate of the received power value when the wireless charging has been completed.

8. The wireless power transmitting apparatus of claim 3,
wherein when the wireless charging is completed, the control unit (223) is configured to regulate the transmitting voltage by decreasing the amount of the transmitting voltage in proportion to the detected current value.

9. The wireless power transmitting apparatus of claim 1,
wherein the charging threshold value is set to 90% or less of a charging current value or a charging voltage value at a state in which the charging is in progress.

10. The wireless power transmitting apparatus of claim 9,
wherein a ratio of the charging threshold value for the current value and a ratio of the charging threshold value for the voltage value are set differently.

11. The wireless power transmitting apparatus of claim 1,
wherein after detecting a wireless power receiving apparatus within a certain distance, the wireless power transmitting apparatus is configured to load a charging threshold value, a predetermined time, and a reception threshold value of the corresponding apparatus.

## Patentansprüche

1. Drahtlose Leistungsübertragungsvorrichtung, Folgendes umfassend:
eine Erfassungseinheit (221), die konfiguriert ist, um Strom und/oder Spannung der drahtlosen Leistungsübertragungsspule (210) zu erfassen; und
eine Ladeüberwachungseinheit (222), die konfiguriert ist, um zu bestimmen, dass ein drahtloses Laden abgeschlossen wurde, wenn eine Zeit, während der der erfasste Strom und/oder die erfasste Spannung unter einem Ladeschwellenwert gehalten wird, eine erste Schwellenzeit überschreitet, wobei die Ladeüberwachungseinheit (222) konfiguriert ist, um eine empfangene Leistung von einer drahtlosen Leistungsempfangsvorrichtung zu empfangen, **dadurch gekennzeichnet, dass** die Ladungsüberwachungseinheit, wenn eine Zeit, während der der erfasste Strom und/oder die erfasste Spannung unter dem Ladeschwellenwert gehalten wird, die erste Schwellenzeit überschreitet (222), konfiguriert ist, um einen von der drahtlosen Leistungsempfangsvorrichtung empfangenen Leistungswert mit einem Empfangsschwellenwert zu vergleichen, und, wenn eine Zeit, während der der empfangene Leistungswert unter einem Empfangsschwellenwert gehalten wird, eine zweite Schwellenzeit überschreitet, es bestimmt wird, dass das drahtlose Laden abgeschlossen wurde.

2. Drahtlose Leistungsübertragungsvorrichtung nach Anspruch 1, ferner umfassend eine Steuerungseinheit (223), die konfiguriert ist, um die Übertragungsspannung zu regeln, wenn das drahtlose Laden abgeschlossen wurde.

3. Drahtlose Leistungsübertragungsvorrichtung nach Anspruch 2, wobei die Steuerungseinheit (223) konfiguriert ist, um die Übertragungsspannung gemäß einer Reduktionsrate des erfassten Stromwerts zu regeln, der an der Erfassungseinheit (221) erfasst wird, wenn das drahtlose Laden abgeschlossen wurde.

4. Drahtlose Leistungsübertragungsvorrichtung nach Anspruch 1, ferner umfassend eine Alarmeinheit (224), die konfiguriert ist, um einen Alarm nach außen abzugeben, wenn das drahtlosen Laden abgeschlossen wurde.

5. Drahtlose Leistungsübertragungsvorrichtung nach Anspruch 1, wobei die zweite Schwellenzeit unterschiedlich von der ersten Schwellenzeit eingestellt wird.

6. Drahtlose Leistungsübertragungsvorrichtung nach Anspruch 2, wobei die Steuerungseinheit (223) konfiguriert ist, um die Übertragungsspannung unter Verwendung des empfangenen Leistungswerts zu regeln, wenn das drahtlose Laden abgeschlossen wurde.

7. Drahtlose Leistungsübertragungsvorrichtung nach Anspruch 6, wobei die Steuerungseinheit (223) konfiguriert ist, um die Übertragungsspannung unter Verwendung einer Reduktionsrate des empfangenen Leistungswerts zu regeln, wenn das drahtlose Laden abgeschlossen wurde.

8. Drahtlose Leistungsübertragungsvorrichtung nach Anspruch 3, wobei, wenn das drahtlose Laden abgeschlossen wurde, die Steuerungseinheit (223) konfiguriert ist, um die Übertragungsspannung durch Verringern der Menge der Übertragungsspannung im Verhältnis zu dem erfassten Stromwert zu regeln.

9. Drahtlose Leistungsübertragungsvorrichtung nach Anspruch 1, wobei der Ladeschwellenwert auf höchstens 90 % eines Ladestromwerts oder eines Ladespannungswerts in einem Zustand, in dem das Laden im Gange ist, eingestellt ist.

10. Drahtlose Leistungsübertragungsvorrichtung nach Anspruch 9, wobei ein Verhältnis des Ladeschwellenwerts für den Stromwert und ein Verhältnis des Ladeschwellenwerts für den Spannungswert unterschiedlich eingestellt sind.

11. Drahtlose Leistungsübertragungsvorrichtung nach Anspruch 1, wobei, nach dem Erfassen einer drahtlosen Leistungsempfangsvorrichtung innerhalb einer bestimmten Entfernung, die drahtlose Leistungsübertragungsvorrichtung konfiguriert ist, um einen Ladeschwellenwert, eine vorbestimmte Zeit und einen Empfangsschwellenwert der entsprechenden Vorrichtung zu laden.

## Revendications

1. Appareil de transmission d'énergie sans fil, comprenant :
une unité de détection (221) qui est configurée pour détecter au moins l'un d'un courant et d'une tension de la bobine de transmission d'énergie sans fil (210) ; et
une unité de surveillance de charge (222) qui est configurée pour déterminer que la charge sans fil est terminée lorsque le temps pendant lequel au moins l'un des courant et tension détectés est maintenu en dessous d'une valeur seuil de charge dépasse un premier temps seuil,
dans lequel l'unité de surveillance de charge (222) est configurée pour recevoir une énergie reçue d'un appareil de réception d'énergie sans fil,
**caractérisé en ce que**, lorsqu'un temps pendant lequel au moins l'un des courant et tension détectés est maintenu en dessous de la valeur seuil de charge dépasse le premier temps seuil, l'unité de surveillance de charge (222) est configurée pour comparer une valeur d'énergie reçue de l'appareil de réception d'énergie sans fil avec une valeur seuil de réception, et lorsqu'un temps pendant lequel la valeur d'énergie reçue est maintenue en dessous d'une valeur seuil de réception dépasse un second temps seuil, on détermine que la charge sans fil est terminée.

2. Appareil de transmission d'énergie sans fil selon la revendication 1, comprenant en outre une unité de commande (223) qui est configurée pour réguler la tension de transmission lorsque la charge sans fil est terminée.

3. Appareil de transmission d'énergie sans fil selon la revendication 2, dans lequel l'unité de commande (223) est configurée pour réguler la tension de transmission selon un taux de réduction de la valeur de courant détectée qui est détectée sur l'unité de détection (221) lorsque la charge sans fil est terminée.

4. Appareil de transmission d'énergie sans fil selon la revendication 1, comprenant en outre une unité d'alarme (224) qui est configurée pour émettre une alarme vers l'extérieur lorsque la charge sans fil est terminée.

5. Appareil de transmission d'énergie sans fil selon la revendication 1, dans lequel le second temps seuil est réglé différemment du premier temps seuil.

6. Appareil de transmission d'énergie sans fil selon la revendication 2, dans lequel l'unité de commande (223) est configurée pour réguler la tension de transmission en utilisant la valeur d'énergie reçue lorsque la charge sans fil est terminée.

7. Appareil de transmission d'énergie sans fil selon la revendication 6, dans lequel l'unité de commande (223) est configurée pour réguler la tension de transmission en utilisant un taux de réduction de la valeur d'énergie reçue lorsque la charge sans fil est terminée.

8. Appareil de transmission d'énergie sans fil selon la revendication 3, dans lequel, lorsque la charge sans fil est terminée, l'unité de commande (223) est configurée pour réguler la tension de transmission en diminuant la valeur de la tension de transmission en proportion de la valeur de courant détectée.

9. Appareil de transmission d'énergie sans fil selon la revendication 1, dans lequel la valeur seuil de charge est réglée à 90 % ou moins d'une valeur de courant de charge ou une valeur de tension de charge dans un état dans lequel la charge est en cours.

10. Appareil de transmission d'énergie sans fil selon la revendication 9, dans lequel un rapport de la valeur seuil de charge pour la valeur de courant et un rapport de la valeur seuil de charge pour la valeur de tension sont réglés différemment.

11. Appareil de transmission d'énergie sans fil selon la revendication 1, détectant un appareil de réception d'énergie sans fil à une certaine distance, l'appareil de transmission d'énergie sans fil est configuré pour charger une valeur seuil de charge, un temps prédéterminé, et une valeur seuil de réception de l'appareil correspondant.
